**Europäisches Patentamt**

**European Patent Office**

**Office européen des brevets**

(11) Numéro de publication: **0 255 458 B1**

(12) **FASCICULE DE BREVET EUROPEEN**

(45) Date de publication du fascicule du brevet:
14.11.90

(51) Int. Cl.⁵: **A01D 84/00**, A01D 78/00

(21) Numéro de dépôt: 87440042.7

(22) Date de dépôt: 07.07.87

(54) **Machine agricole pour déplacer latéralement et retourner des andains de fourrage.**

(30) Priorité: **21.07.86 FR 8610653**

(43) Date de publication de la demande:
**03.02.88 Bulletin 88/5**

(45) Mention de la délivrance du brevet:
**14.11.90 Bulletin 90/46**

(84) Etats contractants désignés:
**AT CH DE FR GB IT LI NL SE**

(56) Documents cités:
**CH-A- 480 777**
**FR-A- 1 273 181**
**FR-A- 1 437 771**
**FR-A- 2 341 258**
**FR-A- 2 522 469**
**GB-A- 345 919**
**US-A- 2 629 223**
**US-A- 4 471 605**

(73) Titulaire: **KUHN S.A., 4, Impasse des Fabriques, F-67700 Saverne(FR)**

(72) Inventeur: **Reber, Walter, 50, Avenue du Maréchal Foch, F-67700 Saverne(FR)**

(74) Mandataire: **Andres, Jean-Claude, KUHN S.A. 4, Impasse des Fabriques, F-67700 Saverne(FR)**

ACTORUM AG

## Description

La présente invention se rapporte à une machine agricole pour déplacer latéralement et retourner des andains de fourrage ou d'autres végétaux se trouvant au sol. Elle comporte un cadre ou châssis portant un dispositif pour ramasser le fourrage au sol et un moyen pour le déplacer latéralement sur une tablette de guidage et le retourner, lequel moyen est constitué par au moins une bande ou courroie flexible ou un élément analogue muni d'entraîneurs. Grâce à un tel retournement, le fourrage qui se trouvait au voisinage du sol est exposé à l'air et au soleil en vue de parfaire le séchage.

Une machine de ce genre, connue dans le brevet US 4.471.605, comporte un dispositif de ramassage prolongé vers l'arrière par une importante surface de guidage avec laquelle coopère un organe d'entraînement. Ladite surface de guidage est constituée par un plateau courbé et s'élevant dans sa partie arrière.

Durant le travail, le dispositif de ramassage achemine le fourrage sur ledit plateau courbé. Ce fourrage est repris par l'organe d'entraînement qui est essentiellement orienté dans la direction du flux du fourrage amené par ledit dispositif. L'organe d'entraînement déplace alors ce fourrage vers l'extrémité arrière du plateau et le fait retomber sur le sol. Lors de ce déplacement, la courbure du plateau doit provoquer un basculement du fourrage en vue d'obtenir le retournement recherché.

Néanmoins, comme sur cette machine la surface du plateau est plus importante que la zone d'action de l'organe d'entraînement, il se produit des accumulations de fourrage dans les endroits situés en dehors de ladite zone d'action. Ces accumulations provoquent rapidement des perturbations dans le déplacement du fourrage et peuvent même entraîner des obstructions, voire le blocage de l'organe d'entraînement.

D'autre part, la surface de guidage dudit plateau courbé doit être très importante pour assurer un retournement complet du fourrage. De ce fait, cette machine est lourde et encombrante et par conséquent difficile à manier.

La présente invention a pour but de proposer une machine pour déplacer et retourner le fourrage ou d'autres végétaux andainés, n'ayant pas les inconvénients des machines connues. Cette machine doit notamment assurer un déplacement et un retournement régulier du fourrage tout en étant simple et facile à mettre en oeuvre.

A cet effet, une importante caractéristique de l'invention consiste en ce que la bande ou courroie flexible pour déplacer et retourner le fourrage est orientée transversalement au flux du fourrage amené par le dispositif de ramassage, en ce que les entraîneurs sont dirigés vers le bas et occupent une position comprise entre une position verticale et une position inclinée de telle sorte que leurs extrémités libres soient dirigées vers le dispositif de ramassage et en ce qu'un déflecteur qui s'étend dans le prolongement de la table de guidage est prévu sur le côté latéral de la machine vers lequel est déplacé le fourrage par les entraîneurs.

Pendant le travail, les entraîneurs déplacent latéralement le fourrage provenant du dispositif de ramassage et le font retomber sur le sol sur un des côtés de la machine. Le retournement de ce fourrage est obtenu lors de la retombée sur le sol, grâce à la projection latérale des entraîneurs, à l'avance de la machine sur le terrain et au guidage assuré par le déflecteur latéral. Ledit déplacement latéral permet en sus de regrouper plusieurs andains afin de faciliter leur ramassage ultérieur.

La disposition tranversale de la bande ou courroie flexible avec les entraîneurs permet d'intercepter la totalité du fourrage ramassé et ce, immédiatement derrière le dispositif de ramassage. De plus, la position des entraîneurs leur permet d'avoir une bonne prise sur le fourrage. Celui-ci est alors déplacé sans qu'il puisse se produire des accumulations entre le dispositif de ramassage et les entraîneurs de la bande ou courroie flexible.

Par ailleurs, la disposition transversale de la bande ou courroie flexible avec les entraîneurs permet de réduire considérablement la longueur de la machine. La machine ainsi agencée est plus légère et plus facile à utiliser, aussi bien au travail qu'au transport.

Il est avantageux que la bande ou courroie flexible s'étende pratiquement sur toute la largeur du dispositif de ramassage. Cette caractéristique permet de supprimer toutes zones dans lesquelles le fourrage pourrait s'accumuler et perturber le fonctionnement de la machine.

Selon une autre caractéristique de l'invention, le châssis support de la machine forme sensiblement un cadre rectangulaire comportant notamment deux poutres transversales disposées à différentes distances du sol. L'une de ces poutres se situe au-dessus du dispositif de ramassage et porte des longerons relié à un cintre muni de points d'accrochage pour l'accouplement à un tracteur d'entraînement. Grâce à cette disposition, le centre de gravité de la machine se situe près du tracteur, ce qui est avantageux notamment avec les machines portées par le dispositif trois points de celui-ci.

Selon une autre caractéristique de l'invention, la position du déflecteur latéral est réglable afin de pouvoir l'adapter aux différentes conditions de travail qu'on peut rencontrer. Pour le transport, il peut être amené à l'arrière du dispositif de ramassage et de la bande ou courroie flexible, afin de réduire la largeur de la machine.

Une autre caractéristique de l'invention consiste en ce que la machine comporte un guide situé à l'avant de la bande ou courroie flexible et du déflecteur s'étendant dans le prolongement de la zone d'action de cette dernière. Ledit guide est de préférence articulé sur le châssis de la machine, de manière à pouvoir s'adapter au volume du fourrage déplacé. Ce guide maintient le fourrage en contact avec le déflecteur de sorte qu'il entame pratiquement son basculement au niveau dudit guide.

Selon une autre caractéristique de l'invention, un carter de renvoi pour l'entraînement du dispositif de ramassage et de la bande ou courroie flexible est disposé sur la poutre transversale du châssis située au-dessus du dispositif de ramassage. Ledit carter peut ainsi se situer pratiquement dans l'axe de l'arbre de prise de force du tracteur. Ceci permet une liaison directe entre ledit arbre de prise de force et l'arbre d'entrée de ce carter. En sus, ledit carter peut être fixé près du centre de gravité de la machine, en vue d'un bon équilibrage de cette dernière.

D'autres caractéristiques et avantages de l'invention ressortiront de la description ci-après avec référence aux dessins annexés qui représentent, à titre d'exemple non limitatif, quelques formes de réalisation selon l'invention.

Dans ces dessins :

- La figure 1 représente une vue de côté d'une machine selon l'invention,
- La figure 2 représente schématiquement une coupe partielle de la machine selon la figure 1,
- La figure 3 représente une coupe similaire à celle de la figure 2, d'une variante de réalisation,
- La figure 4 représente une vue arrière de la machine selon l'invention,
- La figure 5 représente une vue similaire à celle de la figure 4, d'une variante de réalisation,
- La figure 6 représente une vue de dessus de la machine selon l'invention,
- La figure 7 représente une vue similaire à celle de la figure 6, d'une variante de réalisation.

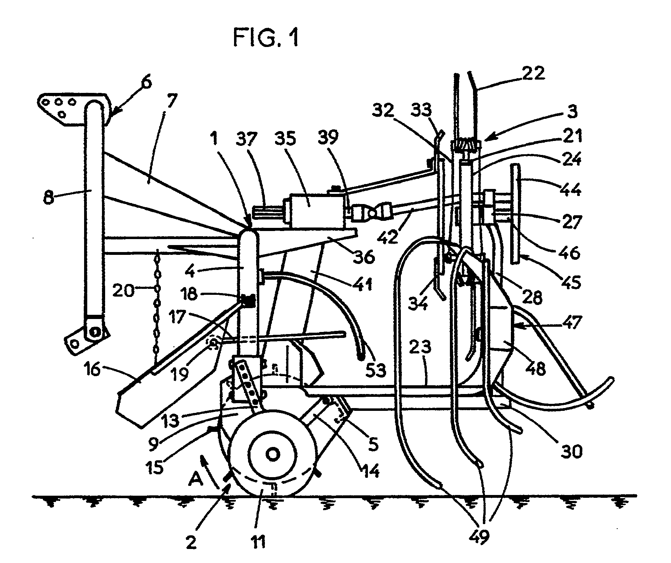

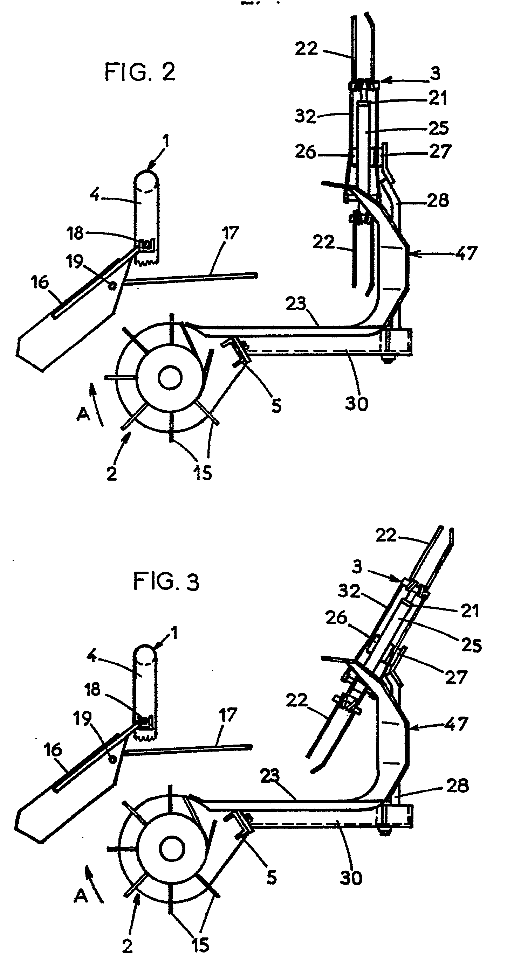

Telle qu'elle est représentée sur les figures 1 et 2, la machine selon l'invention comporte notamment un châssis (1) portant un dispositif (2) pour ramasser le fourrage au sol et, à l'arrière de ce dispositif, un moyen (3) pour déplacer latéralement ce fourrage et le retourner.

Le châssis (1) forme sensiblement un cadre rectangulaire. Il se compose notamment de deux poutres transversales (4 et 5) disposées à différentes distances du sol et pratiquement l'une au-dessus de l'autre.

La poutre supérieure (4) se situe au-dessus du dispositif de ramassage (2) et porte des moyens d'accouplement (6). Ceux-ci sont constitués par deux longerons (7) dirigés vers l'avant et reliés à un cintre (8) muni de trois points d'accrochage. Les deux extrémités de ladite poutre supérieure sont pliées vers le bas et sont reliées à la poutre inférieure (5) au moyen de tôles latérales (9, 10). Cette poutre inférieure (5) se situe sur le côté arrière du dispositif de ramassage (2).

Sur chaque côté de ce dispositif de ramassage (2) est prévue une roulette support (11, 12). Chaque roulette est tenue au moyen de deux bielles (13, 14) articulées sur le cadre (1) et dont l'une (13) peut être immobilisée dans différentes positions par rapport audit cadre. Cette bielle (13) permet de régler la position de la machine par rapport au sol. Durant le travail, ces deux roulettes (11, 12) se déplacent sur le sol et portent la machine.

Le dispositif de ramassage (2) est constitué par un pick-up à dents (15) commandées. Au travail, ces dents (15) sont entraînées en rotation dans le sens de la flèche (A) autour d'un axe sensiblement horizontal. Elles ramassent alors le fourrage couché sur le sol et le transmettent au moyen (3). Lesdites dents (15) pourraient être remplacées par des palettes en matière souple, commandées ou non durant la rotation.

A l'avant et au-dessus du dispositif de ramassage (2) sont disposés un écran (16) et des tiges de guidage (17). Cet écran (16) et les tiges (17) forment un canal de guidage avec le dispositif de ramassage (2), dans lequel ce dernier déplace le fourrage. Ledit écran est articulé sur le châssis (1) au moyen d'axes (18) tandis que les tiges de guidage (17) sont elles-mêmes articulées sur l'écran (16) au moyen d'axes (19). Ces articulations permettent à l'écran (16) et aux tiges (17) de se déplacer par rapport au dispositif de ramassage (2) en fonction du volume du fourrage ramassé. Une chaîne de retenue (20) limite le déplacement vers le bas de l'écran (16).

Le moyen (3) pour déplacer et retourner le fourrage est constitué par au moins une bande ou courroie flexible (21) ou un élément analogue, orienté transversalement au flux du fourrage amené par le dispositif de ramassage (2) et portant des entraîneurs (22). Ces entraîneurs (22) peuvent être constitués par des dents ou des pales souples ou des éléments analogues. Sur les figures annexées, il n'est représentée qu'une seule bande ou courroie flexible (21). On peut cependant en prévoir deux ou davantage disposées l'une derrière l'autre. Une tablette de guidage (23) sensiblement plane s'étend du dispositif de ramassage (2) jusqu'aux entraîneurs (22). Ces derniers déplacent ainsi le fourrage ramassé sur cette tablette (23).

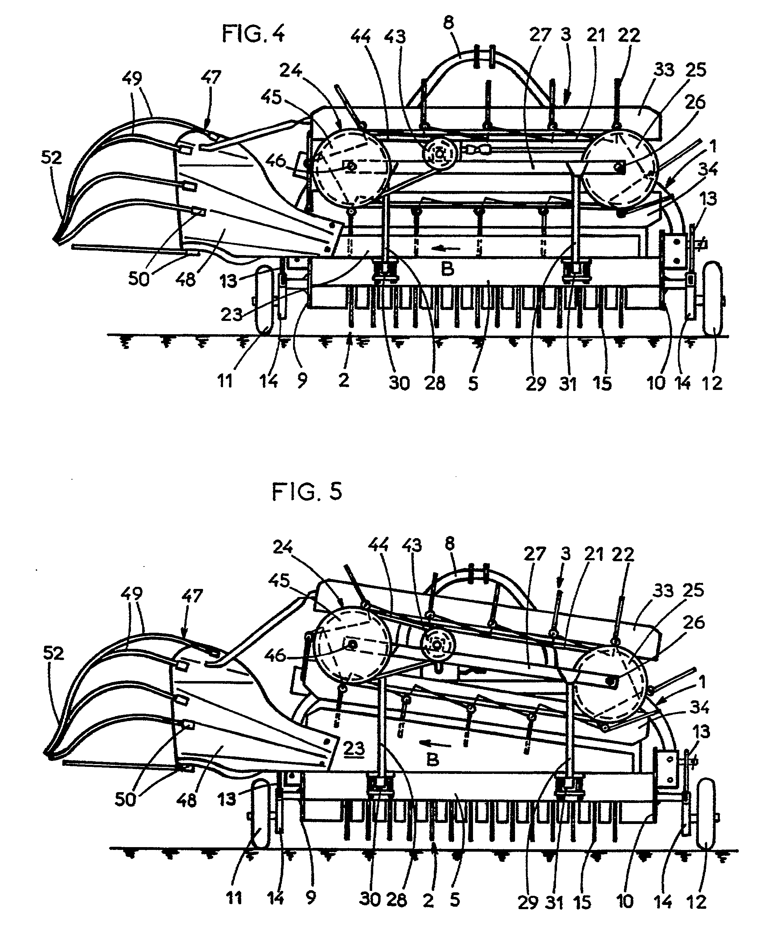

Comme cela ressort notamment des figures 4 et 5, la bande ou courroie flexible (21) s'étend pratiquement sur toute la largeur du dispositif de ramassage (2). Elle est guidée sur deux poulies à gorge (24, 25), chacune de ces poulies étant placée sensiblement au niveau d'une des extrémités dudit dispositif (2).

Ces poulies (24, 25) sont montées sur des axes (26) solidaires d'une poutrelle transversale (27) placée à l'arrière desdites poulies. Cette poutrelle (27) est tenue au moyen de deux montants (28 et 29). A sa partie inférieure, chacun de ces derniers est bridé sur un longeron (30, 31) relié à la poutre inférieure (5) du châssis (1).

Les axes de rotation (26) des poulies (24, 25) sont inclinés par rapport à la verticale. Les deux brins de la bande ou courroie flexible (21) se situent ainsi à des hauteurs différentes par rapport à la tablette de guidage (23). Le brin inférieur constitue la partie active de ladite bande ou courroie. Sur cette partie active, les entraîneurs (22) sont dirigés vers le bas et leurs extrémités inférieures se situent à proximité de la tablette (23) sur laquelle glisse le fourrage. Ces extrémités entrent ainsi rapidement en contact avec le fourrage et l'entraînent énergiquement. Ceci exclut pratiquement toute accumulation de fourrage pouvant gêner son déplacement et ultérieurement son séchage. Les entraîneurs (22) des exemples représentés sont articulés sur la bande ou courroie (21) et sont reliés entre eux au moyen de tringles (32). Ils se commandent ainsi de sorte que sur le côté de la machine, ils se retirent pratiquement verticalement du fourrage déplacé. On évite ainsi des projections latérales trop importantes.

Sur la figure 2, les axes de rotation (26) des poulies (24, 25) forment des angles d'environ 90° avec la verticale et les entraîneurs (22) sont sensiblement perpendiculaires à la tablette de guidage (23). Dans cette position, les entraîneurs (22) ont une bonne prise sur le fourrage et peuvent aisément déplacer d'importantes quantités. Pour le déplacement de fourrage lourd, par exemple lorsqu'il est vert, il peut être avantageux de choisir la variante de la figure 3. Sur cette figure, lesdits axes de rotation (26) sont inclinés de telle sorte que sur la partie active de la bande ou courroie (21), les entraîneurs (22) soient dirigés vers le dispositif de ramassage (2). Cette disposition favorise l'introduction des entraîneurs (22) dans la masse de fourrage à déplacer. Des positions plus ou moins inclinées peuvent éventuellement être choisies par l'utilisateur. Pour cela, la position des montants (28, 29) par rapport aux longerons (30, 31) peut être réglable.

Il ressort d'autre part de la figure 4 que la partie active de la bande ou courroie flexible (21) est sensiblement horizontale. Dans ce cas, le fourrage est simplement déplacé horizontalement.

Dans la variante selon la figure 5, la partie active de la courroie (21) est inclinée par rapport à l'horizontale. En fait, cette partie active est plus élevée sur le côté vers lequel est déplacé le fourrage. Cette inclinaison est obtenue par l'utilisation de montants (28 et 29) de différentes longueurs. En raison de cet agencement, les entraîneurs (22) soulèvent le fourrage en même temps qu'ils le déplacent latéralement. Ceci favorise le retournement du fourrage pendant qu'il retombe sur le sol. La tablette (23) peut également comporter une partie qui s'élève de la même manière que ladite partie active de la bande ou courroie flexible (21). L'inclinaison de cette partie active par rapport à l'horizontale peut aussi être réglable de manière à ce que l'utilisateur puisse adapter lui-même la machine au fourrage à déplacer et à retourner. Pour cela au moins le montant (28) situé du côté vers lequel est déplacé le fourrage, peut être réalisé en deux ou davantage de parties déplaçables les unes par rapport aux autres.

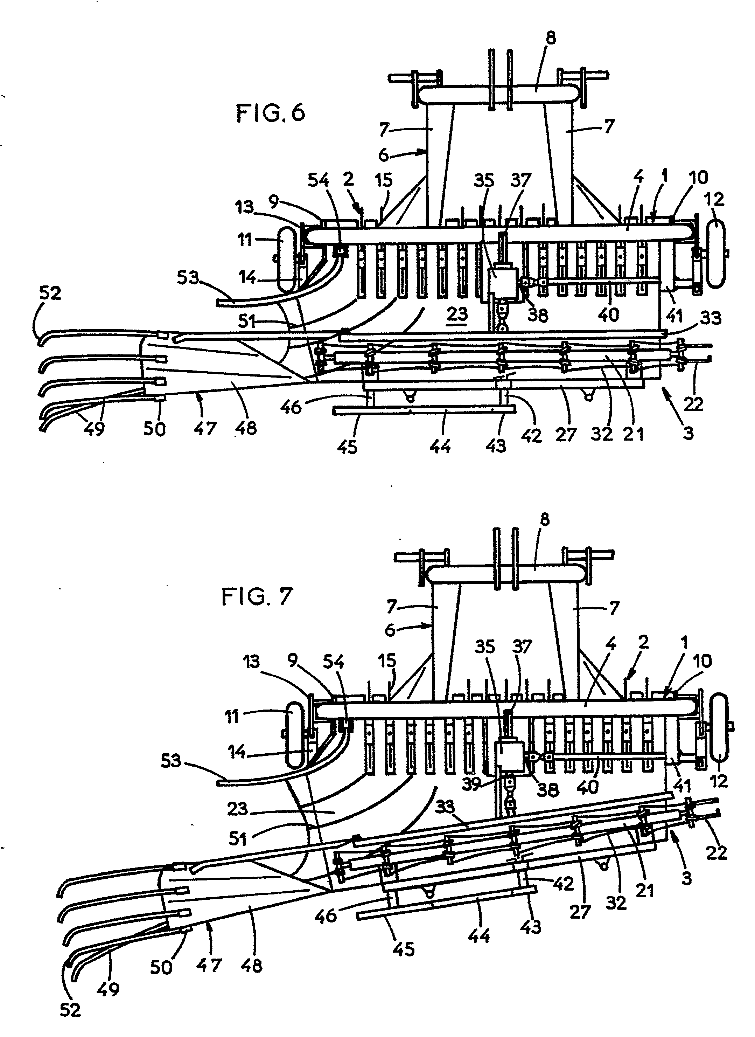

De la vue de dessus représentée sur la figure 6, il ressort que la partie active de la bande ou courroie flexible (21) est sensiblement parallèle au dispositif de ramassage (2). Cette position convient parfaitement pour le déplacement de faibles et moyennes quantités de fourrage.Dans le cas où il y a d'importants volumes de fourrage à déplacer, la disposition selon la figure 7 est plus appropriée. Dans cet exemple de réalisation, la partie active de la bande ou courroie flexible (21)est inclinée par rapport au dispositif de ramassage (2), l'extrémité la plus éloignée dudit dispositif étant celle qui est située du côté vers lequel est déplacé le fourrage. Dans ce cas, l'espace entre le dispositif de ramassage (2) et les entraîneurs (22) s'élargit de sorte qu'on puisse facilement faire passer des masses de fourrage très importantes.

La distance ou l'inclinaison de la partie active de la bande ou courroie flexible (22) par rapport au dispositif de ramassage (2) peut aussi être réglable. Cette caractéristique permet à l'utilisateur de choisir la position qui convient en fonction du volume du fourrage à déplacer et/ou retourner. Ce réglage peut être obtenu en déplaçant les montants (28 et 29) ou uniquement un de ces montants sur les longerons (30 et 31).

A l'avant des deux brins de la bande ou courroie flexible (22) sont avantageusement prévues des glissières (33 et 34) (voir figures 1, 4 et 5). Celles-ci s'étendent sur pratiquement toute la largeur de la machine et empêchent que du fourrage ne vienne s'accrocher auxdits brins. Le côté arrière de la tablette de guidage (23) est relevé et s'étend verticalement derrière les entraîneurs (22). Cette partie relevée forme un écran empêchant toute perte de fourrage sur le côté arrière de la machine.

Durant le travail, le dispositif de ramassage (2) et la bande ou courroie flexible (21) sont entraînés à partir de l'arbre de prise de force du tracteur non représenté. A cet effet, il est prévu un carter de renvoi (35) sur un appui (36) solidaire de la poutre supérieure (4) du châssis (1) (voir figure 1). Ce carter (35) est ainsi situé au-dessus du dispositif de ramassage (2) et environ à égale distance des deux extrémités de ce dernier. Il comporte un arbre d'entrée (37) destiné à être relié à l'arbre de prise de force du tracteur et deux arbres de sortie (38 et 39). Un premier arbre de sortie (38) s'étend latéralement et entraîne, au moyen d'un arbre intermédiaire (40), une chaîne ou une courroie logée dans un boîtier latéral (41). Cette chaîne ou courroie passe sur une roue dentée qui est liée au dispositif de ramassage (2) et assure son entraînement dans le sens de la flèche (A). Le second arbre de sortie (39) du carter (35) s'étend vers l'arrière et est relié par un arbre intermédiaire (42) passant entre les deux brins de la bande ou courroie (21), à une poulie (43) située sur le côté arrière de la machine. Sur cette poulie (43) passe une courroie (44) qui passe d'autre part sur une poulie réceptrice (45) liée par un axe (46) à la poulie (24) portant la bande ou courroie flexible (21). Cet agencement permet d'entraîner ladite bande ou courroie dans le sens de la flèche (B) afin que ses entraîneurs (22) déplacent le fourrage tel que décrit précédemment. Dans certains cas, par exemple pour le regroupement d'andains, il est avantageux de pouvoir déplacer le fourrage vers un des côtés de la machine lors d'un premier passage, et vers le côté opposé lors du passage suivant. Pour cela, il peut être prévu un inverseur de sens de rotation des différentes poulies dans le carter de renvoi (35).

Afin d'obtenir le retournement de 180° du fourrage déplacé, la machine est équipée d'un déflecteur (47) situé pratiquement dans le prolongement de la zone d'action des entraîneurs (22) de la bande ou courroie flexible (21). Sur les figures 1 et 4 à 7, on voit que ce déflecteur (47) s'étend latéralement sur le côté vers lequel est déplacé le fourrage. Il se raccorde à la tablette de guidage (23) et prolonge partiellement cette dernière.

Ledit déflecteur (47) est courbé en forme de versoir afin qu'il imprime un mouvement de rotation au fourrage déplacé. Pour cela, il présente une partie sensiblement horizontale suivie d'une partie arquée. Dans l'exemple représenté, il est constitué par une plaque (48) et des tiges (49). Ces tiges sont introduites dans des tubes (50) fixés sur la plaque (48). Leur position est réglable et ils sont facilement démontables pour réduire la largeur de la machine au transport. La constitution de ce déflecteur peut évidemment être différente de celle décrite ci-dessus sans que son action sur le fourrage soit modifiée. La plaque (48) et la tablette de guidage (23) comportent avantageusement des nervures (51) dirigées vers le haut. Ces nervures (51) réduisent la surface de frottement, ce qui favorise le glissement du fourrage.

Le déflecteur (47) est fixé sur la machine d'une manière réglable et facilement démontable par exemple au moyen de boulons munis d'écrous à oreilles. Ce mode de fixation permet à l'utilisateur de démonter rapidement ledit déflecteur en vue de réduire la largeur de la machine pour le transport. Ce déflecteur peut aussi être articulé sur la machine et être rabattable vers l'arrière ou vers le haut autour d'un axe d'articulation.

Par ailleurs, la partie extérieure du déflecteur (47) constitue un écran (52) qui limite la projection latérale du fourrage. Un écran indépendant, directement rattaché à la machine, pourrait aussi être utilisé.

Comme cela ressort des figures 1, 6 et 7, la machine comporte un guide (53) poussant le fourrage déplacé vers le déflecteur (47). Ce guide (53) se situe au-dessus de la tablette (23) et à l'avant dudit déflecteur. Il est constitué par une tige orientée dans la direction de déplacement du fourrage. Cette tige est articulée sur la poutre supérieure (4) du châssis (1) au moyen d'un axe (54). Grâce à cette articulation, elle peut se déplacer par rapport à la tablette (23) et au déflecteur (47). Cette caractéristique lui permet de s'adapter constamment à l'épaisseur de la masse de fourrage déplacée.

La machine selon l'invention peut être accouplé directement à un tracteur et être animée par ce dernier tel que décrit précédemment. Elle peut aussi être accrochée sur le côté arrière d'une autre machine de traitement de fourrage telle qu'une faucheuse ou faucheuse-conditionneuse. Dans ce cas, elle permet de déplacer immédiatement les produits fauchés en vue de les regrouper pour faciliter leur ramassage ultérieur. Dans une telle combinaison, elle peut être animée soit à partir de cet autre appareil de traitement de fourrage, soit par des moyens spécifiques tel qu'un moteur hydraulique.

## Revendications

1. Machine agricole pour déplacer latéralement du fourrage, comportant un châssis (1) portant un dispositif (2) pour ramasser le fourrage au sol et, à l'arrière de ce dispositif, une tablette de guidage (23) avec laquelle coopère un moyen (3) pour déplacer latéralement ce fourrage sur cette tablette, lequel moyen est constitué par au moins une bande ou courroie flexible (21) ou un élément analogue muni d'entraîneurs (22), et qui est guidé sur au moins deux poulies (24, 25), caractérisée par le fait que la bande ou courroie flexible (21) est orientée transversalement au flux du fourrage amené par le dispositif de ramassage, que sur la partie active de la bande ou courroie flexible (21) les entraîneurs (22) sont dirigés vers le bas et occupent une position comprise entre une position verticale et une position inclinée, de telle sorte que leurs extrémités libres soient dirigées vers le dispositif de ramassage (2) et, qu'un déflecteur (47) qui s'étend dans le prolongement de la tablette de guidage (23) est prévu sur le côté latéral de la machine vers lequel est déplacé le fourrage par les entraîneurs (22).

2. Machine selon la revendication 1, caractérisée par le fait que le déflecteur latéral (47) est courbé d'une manière connue en soi en forme de versoir.

3. Machine selon la revendication 1, caractérisée par le fait que le déflecteur (47) est facilement démontable.

4. Machine selon l'une quelconque des revendications précédentes, caractérisée par le fait que le déflecteur (47) est rabattable autour d'une articulation.

5. Machine selon l'une quelconque des revendications précédentes, caractérisée par le fait que le déflecteur (47) est au moins en partie constitué par une plaque (48) munie de nervures (51) pour favoriser le glissement du fourrage.

6. Machine selon la revendication 1, caractérisée par le fait que l'inclinaison des entraîneurs (22) de la bande ou courroie (21) est réglable.

7. Machine selon la revendication 1, caractérisée par le fait que la partie active de la bande ou courroie (21) est inclinée par rapport à l'horizontale.

8. Machine selon la revendication 1 ou 7, caractérisée par le fait que la position de la partie active de la bande ou courroie flexible par rapport à la tablette de guidage (23) est réglable au moyen de supports (28) télescopiques.

9. Machine selon l'une quelconque des revendications 1 ou 7 ou 8, caractérisée par le fait que la partie active de la bande ou courroie (21) et le côté arrière de la tablette de guidage (23) sont légèrement inclinés par rapport au dispositif de ramassage (2), l'extrémité de ladite bande ou courroie la plus éloignée du dispositif (2) étant celle située du côté vers lequel est déplacé le fourrage.

10. Machine selon l'une quelconque des revendications 1 ou 7 à 9, caractérisée par le fait que la distance ou l'inclinaison de la partie active de la bande ou courroie (21) par rapport au dispositif de ramassage (2) est réglable au moyen de longerons (30 et 31).

11. Machine selon l'une quelconque des revendications précédentes, caractérisée par le fait qu'elle comporte un guide (53) situé au-dessus de la tablette (23) et à l'avant du déflecteur latéral (47) et de la bande ou courroie (21) munie d'entraîneurs (22).

12. Machine selon la revendication 11, caractérisée par le fait que le guide (53) est constitué par une tige orientée dans la direction de déplacement du fourrage.

13. Machine selon la revendication 11 ou 12, caractérisée par le fait que le guide (53) est déplaçable par rapport à la tablette (23) et/ou au déflecteur latéral (47).

14. Machine selon l'une quelconque des revendications précédentes, caractérisée par le fait qu'au voisinage du dispositif de ramassage (2), elle comporte un écran (16) qui est articulé par rapport au châssis (1) et des tiges de guidage (17) articulées par rapport audit écran (16).

15. Machine selon l'une quelconque des revendications précédentes, caractérisée par le fait qu'elle comporte un écran (52) limiteur de projection latérale.

16. Machine selon l'une quelconque des revendications précédentes, caractérisée par le fait que le châssis (1) comporte une poutre transversale (4) qui se situe au-dessus du dispositif de ramassage (2) et qui porte des longerons (7) dirigés vers l'avant et reliés à un cintre (8) muni de trois points d'accrochage.

17. Machine selon l'une quelconque des revendications précédentes, caractérisée par le fait qu'elle est combinée avec un autre appareil de traitement du fourrage.

**Patentansprüche**

1. Landmaschine zum seitlichen Versetzen von Futter mit einem Rahmen (1), der eine Vorrichtung (2) zum Aufnehmen des Futters auf dem Boden und hinter dieser Vorrichtung eine Führungsplatte (23) trägt, mit welcher ein Element (3) zum seitlichen Versetzen dieses Futters auf dieser Platte zusammenwirkt, welches Element aus zumindest einem flexiblen, mit Mitnehmern (22) versehenen Band oder Riemen (21) oder einem ähnlichen Element besteht, das über zumindest zwei Rollen (24, 25) geführt ist, dadurch gekennzeichnet, daß das (der) flexible Band oder Riemen (21) quer zu dem durch die Aufnahmevorrichtung erzeugten Futterstrom gerichtet ist, daß die Mitnehmer (22) auf dem aktiven Teil des flexiblen Bandes oder Riemens (21) nach unten gerichtet sind und eine Stellung zwischen einer Vertikalstellung und einer Winkelstellung einnehmen, derart, daß ihre freien Enden zur Aufnahmevorrichtung (2) gerichtet sind, und daß ein Ablenkelement (47), das sich in der Fortsetzung der Führungsplatte (23) erstreckt, an dem seitlichen Rand der Maschine vorgesehen ist, gegen den das Futter von den Mitnehmern (22) versetzt wird.

2. Maschine nach Anspruch 1, dadurch gekennzeichnet, daß das seitliche Ablenkelement (47) auf an sich bekannte Weise in Wendelform gekrümmt ist.

3. Maschine nach Anspruch 1, dadurch gekennzeichnet, daß das Ablenkelement (47) leicht abnehmbar ist.

4. Maschine nach einem der vorhergehenden Ansprüche, dadurch gekennzeichnet, daß das Ablenkelement (47) um ein Gelenk klappbar ist.

5. Maschine nach einem der vorhergehenden Ansprüche, dadurch gekennzeichnet, daß das Ablenkelement (47) zumindest teilweise aus einer mit Rippen (51) zur Begünstigung des Gleitens des Futters versehenen Platte (48) besteht.

6. Maschine nach Anspruch 1, dadurch gekennzeichnet, daß die Winkellage der Mitnehmer (22) des flexiblen Bandes oder Riemens (21) verstellbar ist.

7. Maschine nach Anspruch 1, dadurch gekennzeichnet, daß der aktive Teil des Bandes oder Riemens (21) in bezug auf die Horizontale geneigt ist.

8. Maschine nach Anspruch 1 oder 7, dadurch gekennzeichnet, daß die Lage des aktiven Teils des flexiblen Bandes oder Riemens in bezug auf die Führungsplatte (23) mittels Teleskopstützen (28) einstellbar ist.

9. Maschine nach einem der Ansprüche 1 oder 7 oder 8, dadurch gekennzeichnet, daß der aktive Teil des Bandes oder Riemens (21) und der hintere Rand der Führungsplatte (23) leicht in bezug auf die Aufnahmevorrichtung (2) geneigt sind, wobei das von der Vorrichtung (2) am weitesten entfernte Ende des Bandes oder Riemens jenes ist, das sich an dem Rand befindet, gegen den das Futter versetzt wird.

10. Maschine nach einem der Ansprüche 1 oder 7 bis 9, dadurch gekennzeichnet, daß der Abstand oder die Neigung des aktiven Teils des Bandes oder Riemens (21) in bezug auf die Aufnahmevorrichtung (2) mittels Holmen (30 und 31) einstellbar ist.

11. Maschine nach einem der vorhergehenden Ansprüche, dadurch gekennzeichnet, daß sie eine oberhalb der Platte (23) und vor dem seitlichen Ablenkelement (47) und dem mit Mitnehmern (22) versehenen Band oder Riemen (21) angeordnete Führung (53) aufweist.

12. Maschine nach Anspruch 11, dadurch gekennzeichnet, daß die Führung (53) aus einer in Richtung der Versetzung des Futters ausgerichteten Stange besteht.

13. Maschine nach Anspruch 11 oder 12, dadurch gekennzeichnet, daß die Führung (53) in bezug auf die Platte (23) und/oder das seitliche Ablenkelement (47) verschiebbar ist.

14. Maschine nach einem der vorhergehenden Ansprüche, dadurch gekennzeichnet, daß sie in der Nähe der Aufnahmevorrichtung (2) eine Ablenkplatte (16), die in bezug auf den Rahmen (1) angelenkt ist, und Führungsstangen (17) aufweist, die in bezug auf die Ablenkplatte (16) angelenkt sind.

15. Maschine nach einem der vorhergehenden Ansprüche, dadurch gekennzeichnet, daß sie eine Ablenkung (52) als Begrenzung der seitlichen Abwurfweite aufweist.

16. Maschine nach einem der vorhergehenden Ansprüche, dadurch gekennzeichnet, daß der Rahmen (1) einen Querträger (4) umfaßt, der sich oberhalb der Aufnahmevorrichtung (2) befindet und der nach vorne gerichtete und mit einem mit drei Anbaupunkten versehenen Bogen (8) verbundene Holme (7) trägt.

17. Maschine nach einem der vorhergehenden Ansprüche, dadurch gekennzeichnet, daß sie mit einem anderen Gerät zur Behandlung von Futter kombiniert ist.

**Claims**

1. An agricultural machine for laterally displacing forage, comprising a chassis (1) bearing a device (2) for gathering forage on the ground, and behind this device a guide plate (23) with which means (3) for laterally displacing the forage over this plate act, the means comprising at least one flexible strip or belt (21) or similar means fitted with drawing means (22) which is guided by at least two pulleys (24, 25), characterised in that the flexible strip or belt (21) is orientated transversely to the flow of forage provided by the gathering device, in that on the active part of the flexible strip or belt (21) the drawing means (22) are directed downwards and occupy a position between a vertical position and an inclined position in such a way that their free extremities are directed towards the gathering device (2), and in that a deflector (47) which extends in the prolongation of the guide plate (23) is provided on the lateral side of the machine to which the forage is displaced by the drawing means (22).

2. A machine according to claim 1, characterised in that the lateral deflector (47) is curved in a known way in the manner of a mould board.

3. A machine according to claim 1, characterised in that the deflector (47) is easily dismantable.

4. A machine according to any one of the foregoing claims, characterised in that the deflector (47) can be folded back about a hinge.

5. A machine according to any one of the foregoing claims, characterised in that the deflector (47) is at least partly constituted by a plate (48) provided with ribs (51) to favour sliding of the forage.

6. A machine according to claim 1, characterised in that the inclination of the drawing means (22) of the strip or belt (21) is adjustable.

7. A machine according to claim 1, characterised in that the active part of the strip or belt (21) is inclined with respect to the horizontal.

8. A machine according to claim 1 or 7, characterised in that the position of the active part of the flexible strip or belt with respect to the guide plate (23) can be adjusted by means of telescopic supports (28).

9. A machine according to any one of claims 1 or 7 or 8, characterised in that the active part of the strip or belt (21) and the rear side of the guide plate (23) are slightly inclined with respect to the gathering device (2), the end of the said strip or belt furthest from device (2) being that located on the side towards which the forage is displaced.

10. A machine according to any one of claims 1 or 7 to 9, characterised in that the distance or inclination of the active part of the strip or belt (21) can be adjusted with respect to the gathering device (2) by means of longitudinal members (30 and 31).

11. A machine according to any one of the foregoing claims, characterised in that it incorporates a guide (53) located above the plate (23) and in front of the lateral deflector (47) and the strip or belt (21) fitted with drawing means (22).

12. A machine according to claim 11, characterised in that the guide (53) consists of a rod orientated in the direction of displacement of the forage.

13. A machine according to claim 11 or 12, characterised in that the guide (53) is displaceable in relation to the plate (23) and/or the lateral deflector (47).

14. A machine according to any one of the foregoing claims, characterised in that in the vicinity of the gathering device (2) it incorporates a screen (16) which is articulated with respect to the chassis (1) and guide rods (17) articulated with respect to the said screen (16).

15. A machine according to any one of the foregoing claims, characterised in that it incorporates a screen (52) limiting the lateral projection of material.

16. A machine according to any one of the foregoing claims, characterised in that the chassis (1) incorporates a transverse beam (4) which is located above the gathering device (2) and which bears longitudinal members (7) which are directed forward and are connected to an arched member (8) fitted with three attachment points.

17. A machine according to any one of the foregoing claims, characterised in that it is combined with another item of equipment for forage treatment.

FIG. 1

FIG. 2

FIG. 3

## FIG. 4

## FIG. 5

FIG. 6

FIG. 7